# DEMANDE DE BREVET EUROPEEN

(11) **EP 2 653 060 A2**
(43) Date de publication de la demande: **23.10.2013**
(21) Numéro de dépôt: 13290086.1
(22) Date de dépôt: 17.04.2013
(51) Int. Cl.: A45D 42/06, B62J 29/00

(54) **Rétroviseur portatif deux pièces**

(30) Priorité: 19.04.2012 FR 1201154
(71) Demandeur: Kalogeropoulos, Leonidas, 75006 Paris (FR)
(72) Inventeur: Kalogeropoulos, Leonidas, 75006 Paris (FR)
(74) Mandataire: Eidelsberg, Olivier Nathan

(57) **Abrégé**

Dispositif formant rétroviseur portable pour un véhicule qui se pilote en tenant un guidon à la main, comportant un élément (1) de base, notamment en forme de bracelet, destiné à se solidariser à une partie du corps de l'utilisateur, notamment à s'enrouler autour d'une partie de la main constituée de la paume et du dos de la paume, hors le pouce ; et un élément (2) formant miroir comportant un miroir (4), et des moyens de fixation amovibles étant prévus pour fixer de manière amovible l'élément miroir à l'élément de base, les moyens de fixation amovible comportant une partie femelle en forme de cavité (8) qui reçoit en son sein une partie mâle (5, 6) pour assurer par coopération de la partie mâle et de la partie femelle la fixation amovible du miroir à l'élément de base.

## Description

La présente invention se rapporte à un dispositif formant rétroviseur portatif dans le domaine des véhicules dont le pilotage nécessite de tenir avec une ou les mains un guidon, par exemple un vélo, un cyclomoteur, un scooter, un scooter à trois roues, un quad, une moto, un side-car, etc.

On connaît dans l'art antérieur, et notamment de la demande de brevet français publiée sous le N° 2945922 au nom du demandeur, des dispositifs de ce genre qui comportent, d'une part, un bracelet qui définit un anneau par lequel le dispositif est fixé de manière amovible à l'utilisateur, notamment autour de la main, et notamment le long de la paume et du dos de la main, hors le pouce, et, d'autre part, une partie supérieure comportant un boîtier qui reçoit en son sein un miroir, la partie supérieure étant montée de manière amovible sur le bracelet.

Ces dispositifs connus de l'art antérieur présentent plusieurs inconvénients. En particulier, ils sont de structure compliquée en étant notamment constitués d'un grand nombre de pièces. Par exemple, dans le dispositif de l'art antérieur mentionné ci-dessus, entre le boîtier et le bracelet, il est prévu une plaque qui doit être fixée à une partie du bracelet qui a été préalablement rendue plane, tandis que le boîtier comporte de même une partie plane correspondante destinée à coulisser sur la plaque fixée au bracelet suivant un système à ergot et rainure de guidage correspondante qui rend le dispositif compliqué à fabriquer à grande échelle et à bas coût.

La présente invention vise à surmonter les inconvénients de l'art antérieur en proposant un dispositif formant rétroviseur portable du genre mentionné ci-dessus qui soit très simple à fabriquer tout en étant cependant résistant aux éventuels chocs et assurant en outre un excellent champ de vision arrière en utilisation.
Suivant l'invention, un dispositif formant rétroviseur portable pour un véhicule qui se pilote en tenant un guidon à la main, est tel que défini à la revendication 1, des perfectionnements et modes de réalisation préférés étant définis aux sous revendications 2 à 10.

En prévoyant ainsi que l'élément femelle se trouve non pas comme dans l'art antérieur dans la partie formant miroir mais directement dans la partie de base, notamment en forme de bracelet, et en réalisant ce bracelet d'une seule pièce en un matériau élastomère, on obtient la possibilité, grâce à la présence du matériau élastomère, de réaliser l'élément de base par une simple étape de moulage, tout en ayant cependant une bonne fixation de l'élément mâle à l'élément femelle, le matériau élastomère permettant de réaliser par moulage l'élément femelle. On obtient grâce à cette fabrication par simple moulage d'une seule pièce de l'élément de base un dispositif formant miroir portable à la main ou sur une partie du corps de l'utilisateur particulièrement simple à fabriquer et donc à faibles coûts. En outre, le dispositif suivant l'invention est plus sûr d'utilisation et plus résistant au choc. En effet, en raison du petit nombre de pièces et de la grande souplesse liée au matériau élastomère, le dispositif, lors de chocs éventuels, a une grande capacité à plier plutôt que rompre par rapport aux dispositifs de l'art antérieur.

De préférence, l'élément de base a la forme d'un bracelet.

De préférence, l'élément de base en forme de bracelet est réalisé d'une seule pièce issue de moulage.

Suivant un mode de réalisation préféré de l'invention, l'élément mâle est constitué d'une tige issue de l'élément formant miroir terminée par une tête faisant saillie latéralement de la tige qui est reçue dans l'élément femelle en forme de trou borgne de l'élément formant bracelet. Les dimensions respectives du trou borgne, de la tête et de la tige sont choisies pour faire en sorte que la tête soit maintenue par pression élastique des parois du trou borgne contre la tête.

De préférence, la tête a une forme de boule, notamment sphérique.

Suivant un mode de réalisation préféré de l'invention, l'élément formant miroir comporte un boîtier dans lequel est logé le miroir et l'élément mâle fait saillie du boîtier.

Suivant un mode de réalisation préféré de l'invention, en position d'utilisation du dispositif porté à la main, c'est-à-dire dans une utilisation dans laquelle le bracelet est enroulé autour de la paume et du dos de la main sans passer par le pouce, ni par les doigts, l'élément femelle en forme de cavité de réception de l'élément mâle est décalé latéralement par rapport à l'anneau défini par le bracelet entourant la main de l'utilisateur, pour ainsi faciliter le champ de vision vers l'arrière de ce dernier.

De préférence, l'axe de la tige du miroir, lorsqu'elle est reçue dans la cavité borgne, est incliné par rapport au plan défini par l'ouverture du bracelet, c'est à dire par rapport au plan perpendiculaire à l'axe de l'ouverture du bracelet.

De préférence, la projection de l'axe de la tige lorsqu'elle est reçue dans la cavité borgne dans le plan de l'ouverture du bracelet est inclinée par rapport à la verticale.

A titre d'exemple et d'illustration de l'invention uniquement, on décrit maintenant un mode de réalisation de l'invention en se rapportant aux dessins dans lesquels :
- la Figure 1: est une vue en perspective d'ensemble d'un dispositif suivant l'invention tel que porté à la main d'un utilisateur ;
- la Figure 2: est une autre vue en perspective du dispositif de la Figure 1 montrant en position d'utilisation la partie du côté de la paume de la main du dispositif ;
- la Figure 3: est une vue de côté du dispositif des Figures 1 et 2 ;

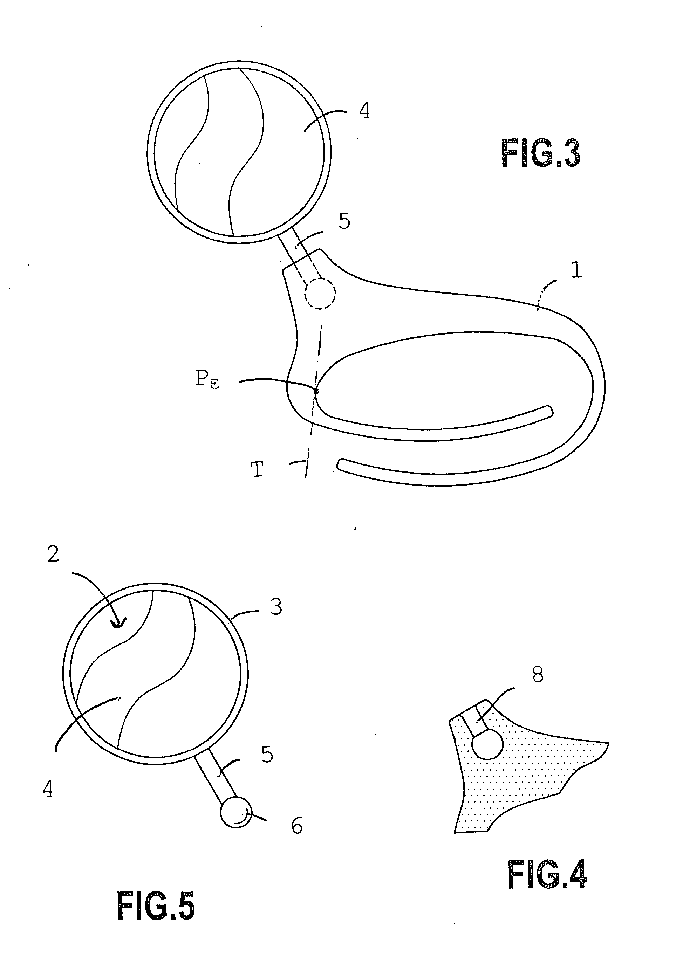

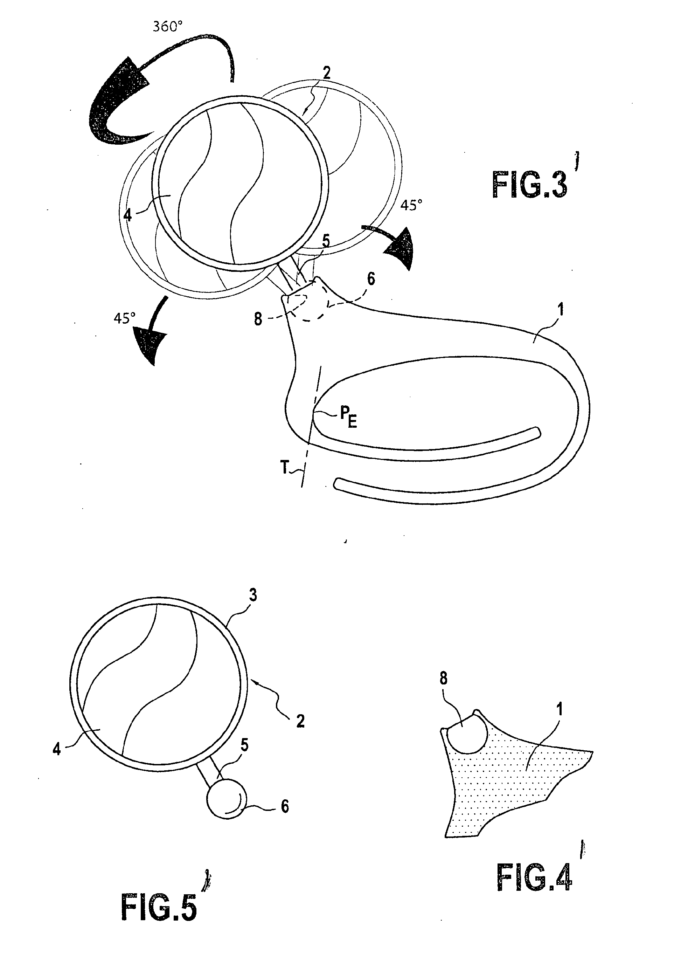

- la Figure 3': est une vue de côté d'un dispositif de l'invention d'un autre mode de réalisation ;

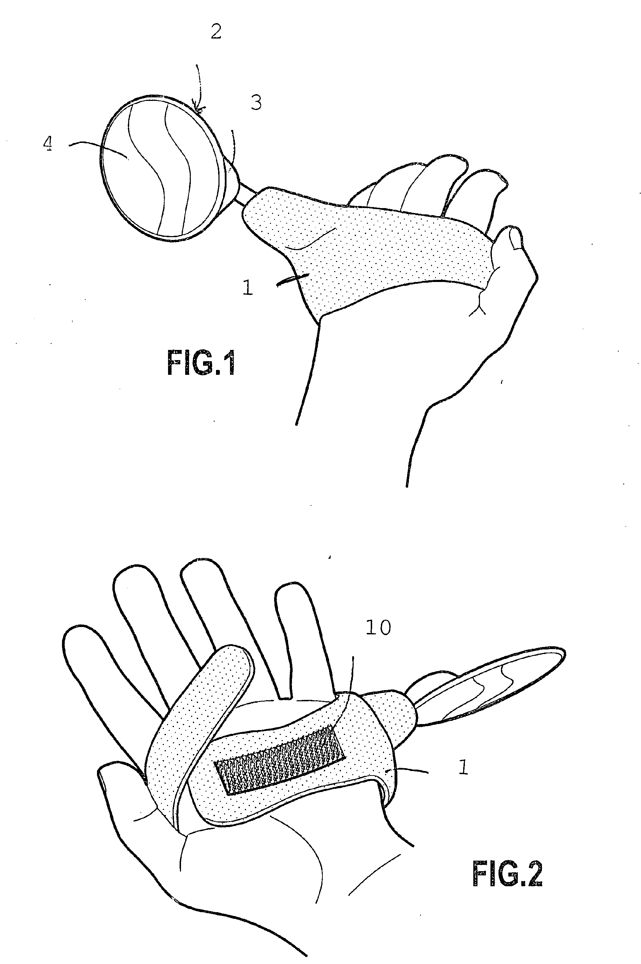

- la Figure 4: représente en vue de côté et partiellement en coupe l'élément formant bracelet du dispositif des Figures 1 à 3 ;
- la Figure 4': représente en vue de côté et partiellement en coupe l'élément formant bracelet du dispositif de la Figure 3' ;
- la Figure 5: représente suivant une vue en perspective la partie formant miroir du dispositif des Figures 1 à 3 destinée à coopérer avec l'élément formant bracelet de la Figure 4 pour former le dispositif représenté dans son ensemble aux Figures 1 à 3 ; et
- la Figure 5': représente suivant une vue en perspective la partie formant miroir du dispositif de la Figure 3' destinée à coopérer avec l'élément formant bracelet de la Figure 4' pour former le dispositif représenté à la Figure 3'.

A la Figure 1, il est représenté un dispositif suivant l'invention formant rétroviseur portable à la main pour un véhicule du genre bicyclette ou vélomoteur.

Le dispositif est constitué de deux parties, à savoir un élément 1 de base formant bracelet qui s'enroule autour de la main de l'utilisateur hors le pouce, sensiblement au niveau du long de la paume et du dos de la main à la base des doigts, l'utilisateur serrant en même temps le guidon avec ses doigts et maintenant ainsi serré contre lui la partie inférieure du bracelet. Le dispositif comporte en outre un élément 2 formant miroir qui est constitué d'un boîtier 3 en un matériau à grande rigidité tel qu'un polycarbonate qui définit une surface de logement d'un miroir 4. De l'élément 2 formant miroir, fait saillie une tige 5, à l'extrémité de laquelle se trouve une partie de tête 6 faisant saillie latéralement de la tige 5. La tête 6 a ici la forme d'une boule sphérique. La tige et la tête sont en un matériau dur ou à grande rigidité, par exemple le même matériau que le boîtier.

Il est formé dans le bracelet même une cavité en forme de trou borgne 8 qui débouche à l'extérieur latéralement par rapport à la main de l'utilisateur lorsqu'il utilise le dispositif, c'est-à-dire à l'extérieur de la droite T tangente passant par le point Pₑ du cercle formé par le bracelet le plus à l'extérieur. Cette cavité 8 borgne a la forme d'un cylindre comportant un tronçon sensiblement de section circulaire ayant un diamètre sensiblement égal au diamètre de la section de la tige terminé par un tronçon de forme complémentaire de la boule 6 de diamètre légèrement plus petit que le diamètre de la boule 6.

L'axe du cylindre de la cavité borgne est incliné par rapport au plan défini par l'ouverture du bracelet, c'est à dire par rapport au plan perpendiculaire à l'axe de l'ouverture du bracelet. L'inclinaison de l'axe du cylindre, et donc également de l'axe de la tige du miroir lorsqu'elle est insérée dans la cavité borgne, est vers l'avant (par rapport au sens de déplacement du véhicule). De préférence, cet angle d'inclinaison vers l'avant est compris entre 2° et 15°, notamment d'un angle de7°.

En outre, la projection de l'axe du cylindre de la cavité borgne dans le plan de l'ouverture du bracelet (plan de la figure 3 ou 3') est inclinée par rapport à la verticale d'un angle compris entre 20° et 60°, notamment d'un angle de 45°.

Ainsi, pour fixer le miroir au bracelet, on insère la boule et la tige à l'intérieur du trou borgne en allant à l'encontre de la force élastique du matériau élastomère formant les parois du trou borgne du bracelet. Une fois la boule insérée dans la cavité 8 femelle, la matière élastomère du bracelet maintient par compression élastique la rotule à l'intérieur du trou borgne.

On peut également prévoir au niveau où débouche le trou borgne une sorte de rebord, de sorte que la section transversale du trou borgne a un diamètre légèrement inférieur au diamètre de la boule mais supérieur à la section de la tige, tandis que l'ouverture définie par le rebord a un diamètre sensiblement égal en étant légèrement inférieur au diamètre de la section de la tige, ce qui a pour effet de conforter encore plus la solidarisation mutuelle amovible du miroir au bracelet.

Comme représenté à la Figure 3, on peut prévoir un système 10 dit Velcro pour fermer le bracelet. Suivant un autre mode de réalisation, on peut prévoir un système à boucle ou même aucun système de fermeture, les deux pans du bracelet, en utilisation, étant serrés l'un contre l'autre entre le guidon et les doigts de l'utilisateur.

Aux Figures 3', 4' et 5', il est représenté un autre mode de réalisation, dans lequel le trou borgne 8' a la forme complémentaire de la boule 6 et les dimensions relatives de la tête 6, de la tige 5' et du trou borgne 8' sont telles que seule la tête 6 en forme de boule est reçue à l'intérieur du trou borgne 8', tandis que la totalité de la tige 5' reste à l'extérieur. On obtient ainsi une grande facilité de rotation du miroir, notamment comme indiqué à la Figure 3', une rotation de ±45° de la tige par rapport à la position centrale.

En particulier, les dimensions relatives de la boule 6' et du trou borgne 8' sont telles qu'une petite partie de la boule au niveau de la tige 5 reste à l'extérieur du trou borgne pour permettre une rotation de ±45° de la tige qui vient ainsi buter sur le rebord 9' de l'ouverture supérieure du trou 8' dans les positions pivotées de ±45° (en traits moins foncés) par rapport à la position centrale représentée en traits pleins à la Figure 3'. Le reste du mode de réalisation de la Figure 3' est identique à celui des Figures 1 à 5.

Le bracelet est réalisé en un matériau élastomère, notamment en polyuréthane disponible auprès de la société Axon sous la référence 3428. Il est en particulier réalisé d'une seule pièce et notamment par moulage. Le fait qu'il soit réalisé par moulage est rendu possible par le fait qu'au moins la partie qui correspond à la matière définissant la cavité du trou borgne est en le matériau élastomère, de manière à pouvoir démouler cette partie du moule de fabrication, notamment la partie en forme de boule de la cavité, et également dans le cas où l'on prévoit le rebord qui sinon empêcherait le démoulage. Cependant, l'élasticité de la matière permet l'éjection du moule, puis le retour en sa position comme dans le moule de la partie en contre-dépouille constituée par le rebord.

En particulier, Le matériau élastomère peut présenter ou non des caractéristiques thermorétractables. Il peut être formé, en particulier, à partir de polymères, tels que des copolymères de différents types de motif de monomères, par exemple alterné tel que A-B, ou séquencé, par exemple A-A-A-B-B-B, ou statistique, par exemple A-A-B-A-B-B-A-A-A-B-A, dont l'ensemble du réseau obtenu peut avoir différentes structures, soit linéaires de type A-B-A, soit radiales de type (A-B)n, indice n (n>2), soit diblock de type A-B qui sont élastomères, par exemple les copolymères styrène/isoprène (SI), styrène/isoprène/styrène (SIS), styrène/butadiène/styrène (SBS), styrène-éthylène/butylène-styrène (SEBS), styrène-éthylène/propylène-styrène (SEPS) ou SIBS. Des mélanges de ces élastomères les uns avec les autres ou avec des non élastomères modifiant certaines caractéristiques autres que l'élasticité peuvent également être pris en compte. Par exemple jusqu'à 50 % en poids mais, de préférence, moins de 30 % en poids de polymère peuvent être ajoutés afin de modifier certaines caractéristiques des matériaux de base (élasticité, tenue à la chaleur, processabilité, tenue aux UV, colorant,...), tels que des polyvinyles styrène, des polystyrènes ou des poly α-méthyl-styrène, polyesters époxy, polyoléfines, par exemple des polyéthylènes ou certains acétates d'éthylène/vinyle, de préférence ceux de poids moléculaire élevé.

Le matériau élastomère peut être, notamment, un styrène-isoprène-styrène, disponible par exemple auprès de la Société Kraton Polymers, sous la dénomination KRATON D(Marque déposée), ou de la société DEXCO POLYMERS LP sous la dénomination VECTOR SBC 4211 (Marque déposée). On peut également utiliser un élastomère thermoplastique de polyuréthane, notamment le PELLATHANE (Marque déposée) 2102-75A de la Société The Dow Chemical Company. On peut utiliser également un styrène-butadiène-styrène, notamment le KRATON D-2122 (Marque déposée) de la société Kraton Polymers , ou le VECTOR SBC 4461 (Marque déposée)de la société Dexco Polymers LP. On peut aussi utiliser un styrène-éthylène/butylène, notamment le KRATON G-2832 (Marque déposée) de la société Kraton Polymers, ou un copolymère séquencé styrène-éthylène-butylène-styrène (SEBS), notamment le KRATON (Marque déposée) G2703. On peut également utiliser un copolymère d'acrylate d'isooctyle et d'acide acrylique suivant des rapports de monomère de 90/10. On peut également utiliser un copolymère séquencé polyamide polyéther PEBAX (Marque déposée) 2533 de la société Arkema.

D'autres matériaux possibles sont des polymères polyoléfines, principalement des copolymères d'éthylène et/ou propylène, ayant des caractéristiques des élastomères, notamment issus de la catalyse métallocène, tel le VISTAMAXX VM-1120 (Marque déposée), disponible auprès de la société Exxon Mobil Chemical ou encore des polymères chargés EPDM du type Santoprène.

Suivant un ou d'autre modes de réalisation non représentés aux figures, l'élément de base n'est pas nécessairement constitué d'un bracelet. Par exemple, il peut s'agir d'un gant ou d'une mitaine sur lequel ou laquelle on a fixé un volume de matière élastomère dans lequel a été préalablement formée la cavité femelle.

## Revendications

1. Dispositif formant rétroviseur portable pour un véhicule qui se pilote en tenant un guidon à la main, comportant un élément (1) de base, notamment en forme de bracelet, destiné à se solidariser à une partie du corps de l'utilisateur et un élément (2) formant miroir comportant un miroir (4), des moyens de fixation amovibles étant prévus pour fixer de manière amovible l'élément miroir à l'élément de base, les moyens de fixation amovible comportant une partie femelle en forme de cavité (8) qui reçoit en son sein une partie mâle (5, 6) pour assurer par coopération de la partie mâle et de la partie femelle la fixation amovible du miroir à l'élément de base,
- l'élément femelle en forme de cavité faisant partie de l'élément de base;
- au moins la partie de l'élément de base qui forme l'élément femelle étant d'une seule pièce issue de moulage ; **caractérisé en ce que**
- au moins la partie de l'élément de base qui forme l'élément femelle, et de préférence l'ensemble de l'élément de base, est en un matériau élastomère ; et
- l'élément de base est réalisé de manière à s'enrouler autour d'une partie de la main constituée de la paume et du dos de la main, hors le pouce, notamment sensiblement au niveau de la base des doigts.

2. Dispositif suivant la revendication 1, **caractérisé en ce que** en utilisation l'utilisateur serre en même temps le guidon avec ses doigts en maintenant serré contre lui une partie de l'élément (1) de base.

3. Dispositif suivant la revendication 1 ou 2, **caractérisé en ce que** l'élément de base est constitué d'un bracelet.

4. Dispositif suivant l'une des revendications 1 à 3, **caractérisé en ce que** l'élément de base est réalisé d'une seule pièce issue de moulage.

5. Dispositif suivant l'une des revendications 1 à 4, **caractérisé en ce que** l'élément mâle est constitué d'une tige (5) issue de l'élément formant miroir terminée par une tête (6) faisant saillie latéralement de la tige qui est reçue dans l'élément femelle en forme de trou borgne de l'élément formant bracelet.

6. Dispositif suivant la revendication 5, **caractérisé en ce que** la tête a une forme de boule, notamment sphérique.

7. Dispositif suivant l'une des revendications 1 à 6, **caractérisé en ce que** l'élément formant miroir comporte un boîtier dans lequel est logé le miroir et l'élément mâle fait saillie du boîtier.

8. Dispositif suivant l'une des revendications 1 à 7, **caractérisé en ce que**, en position d'utilisation du dispositif porté à la main, c'est-à-dire dans une utilisation dans laquelle le bracelet est enroulé autour de la paume et du dos de la main sans passer par le pouce, ni par les doigts, l'élément femelle en forme de cavité de réception de l'élément mâle est décalé latéralement par rapport à l'anneau défini par le bracelet entourant la main de l'utilisateur, pour ainsi faciliter le champ de vision vers l'arrière de ce dernier.

9. Dispositif suivant l'une des revendications 3 à 8, **caractérisé en ce que** l'axe de la tige du miroir, lorsqu'elle est reçue dans la cavité borgne, est incliné par rapport au plan défini par l'ouverture du bracelet, c'est à dire par rapport au plan perpendiculaire à l'axe de l'ouverture du bracelet.

10. Dispositif suivant l'une des revendications 3 à 9, **caractérisé en ce que** la projection de l'axe de la tige lorsqu'elle est reçue dans la cavité borgne dans le plan de l'ouverture du bracelet est incliné par rapport à la verticale.
